# EUROPÄISCHE PATENTSCHRIFT

(11) **EP 1 511 668 B1**
(45) Veröffentlichungstag und Bekanntmachung des Hinweises auf die Patenterteilung: **28.03.2007**
(21) Anmeldenummer: 03720421.1
(22) Anmeldetag: 04.04.2003
(51) Int. Cl.: B62D 23/00

(54) **DREIDIMENSIONALE KNOTENSTRUKTUR**
THREE-DIMENSIONAL NODE STRUCTURE
STRUCTURE DE LIAISON TRIDIMENSIONNELLE

(30) Priorität: 09.04.2002 DE 10215442
(43) Veröffentlichungstag der Anmeldung: 09.03.2005
(73) Patentinhaber: ThyssenKrupp Steel AG, 47166 Duisburg (DE)
(72) Erfinder: PATBERG, Lothar, 52074 Aachen (DE)
(74) Vertreter: Cohausz & Florack
(86) Internationale Anmeldenummer: PCT/EP2003/003512
(87) Internationale Veröffentlichungsnummer: WO 2003/084800

(56) Entgegenhaltungen:
- EP-A- 0 478 551
- GB-A- 1 559 178
- US-A- 1 972 309
- US-B1- 6 361 244

## Beschreibung

Die Erfindung betrifft eine aus zwei Hohlprofilen gebildete dreidimensionale Knotenstruktur eines Tragrahmens für Fahrzeuge sowie ein Verfahren zu deren Herstellung.

Knotenstrukturen für Fahrzeugtragrahmen sind in verschiedenen Ausführungen bekannt. In der EP 0568 213 B1 ist eine dreidimensionale Knotenstruktur mit einem Verbindungsstück zur Verbindung von Elementen eines Fahrzeugtragrahmens beschrieben. Das Verbindungsstück besteht aus einem vorzugsweise strangepressten U-Profil mit zwei Schenkelplatten und einer die Schenkelplatten verbindenden Stegplatte, in das ein Tragelement eingelegt und mit diesem durch Verkleben verbunden ist. Auf den Außenseiten einer Schenkelplatte und der Stegplatte sind im wesentlichen quaderförmige Ansetzstücke befestigt, auf die stirnseitig weitere Tragelemente aufgesteckt und mit dem Verbindungsstück verklebt werden können, so dass sich im Ergebnis die Tragelemente zu einer stabilen Knotenstruktur in kompakter Bauweise verbinden lassen. Nachteilig an dieser Konstruktion ist jedoch, dass sie zur Verbindung der Tragelemente ein weiteres Bauteil in Form des Verbindungsstücks erfordert, was zu einer unerwünschten Erhöhung des Gesamtgewichts des Tragrahmens führt.

In der EP 0 568 251 B1 ist ein Tragrahmen für Fahrzeuge beschrieben, welcher aus mehreren Baugruppen auf Basis von Hohlprofilen besteht. Die Hohlprofile sind über Knotenstrukturen verschiedener Art in gestreckter oder gewinkelter Lage, vorzugsweise rechtwinkliger Lage, miteinander verbunden. Die Verbindung rechtwinklig zueinander angeordneter Profile, beispielsweise die Verbindung zwischen B-Säule und Seitenschweller, ist über eine T-förmige Knotenstruktur realisiert. Gemäß einer Ausführungsform eines solchen T-Knotens weist ein erstes Hohlprofil mit rechteckigem Querschnitt an seinem einen Ende zwei um jeweils 90° umgebogene, zueinander fluchtend angeordnete Abschnitte mit C-förmigem Querschnitt auf, an die ein zweites Hohlprofil angelegt und mit diesen verschweißt werden kann. Die dreidimensionale Rahmenstruktur ist mittels jeweils zweidimensional ausgebildeter Knotenstrukturen realisiert. Eine dreidimensionale Knotenstruktur, d.h..die gegenseitige Anbindung von sich in drei Raumrichtungen erstreckenden Hohlprofilen in einem Punkt ist hierbei nicht vorgesehen.

Eine der vorgenannten Ausführungsform eines T-Knotens ähnliche Knotenstruktur ist aus der DE 37 26 079 A1 bekannt. In dieser Druckschrift ist eine Türrahmenkonstruktion für Nutzfahrzeuge, insbesondere Omnibusse, beschrieben. Zentraler Bestandteil dieser Konstruktion ist eine T-Knotenstruktur zur Verbindung zweier im rechten Winkel zueinander stehender Hohlprofile als Komponenten des Türrahmens. Dabei ist eines der Hohlprofile an seinem dem anderen Profil zugewandten Ende in sich gegenüberliegenden Seitenflächen derart längs ausgeschnitten, dass zwei U-förmige Anschlussstücke entstehen, die zu einer gewünschten Übergangskontur verformbar und an das anzubindende Profil anlegbar sind. Da es sich bei dem Türrahmen um eine rein zweidimensionale Konstruktion handelt, sind hierbei folglich ebenfalls keine dreidimensionalen Knotenstrukturen realisiert.

Weiterhin werden bei einer aus der Praxis bekannten Anwendung der aufgrund fehlender Schweißflansche gewichtsgünstigen Innenhochdruckumform-Technologie (IHU) gebogene Hohlprofile zur Erzeugung einer dreidimensionalen Knotenstruktur eingesetzt. Jedoch erweist es sich dabei als problematisch, dass ein Mindestbiegeradius nicht unterschritten werden kann, so dass einerseits eine Verwendung in Karosseriebereichen mit beengtem Bauraum oftmals nicht in Frage kommt und andererseits vorhandenes Gewichtseinsparungspotential ungenutzt bleibt.

Schließlich ist in der US 1,972,309 eine aus zwei Hohlprofilen insbesondere mit quadratischem Querschnitt bestehende dreidimensionale Knotenstruktur beschrieben. Zur Herstellung dieser Knotenstruktur wird das erste Hohlprofil über eine bestimmte Länge bis auf eine verbleibende Seite ausgeschnitten und mit dieser Seite um eine der Längskanten eines senkrecht zum ersten Hohlprofil angeordneten zweiten Hohlprofils identischen Querschnitts gebogen. Die Länge des Ausschnitts entspricht dabei dem jeweils doppelten Kantenabstand der Hohlprofile, so dass die umgebogene Seite sowie die den Ausschnitt begrenzenden Enden des ersten Hohlprofils die vier Seiten des zweiten Hohlprofils vollständig umfassen und dabei formschlüssig an ihnen anliegen. Nach einer alternativen Ausgestaltung wird das erste Hohlprofil entlang seiner vier Kanten über die genannte Länge eingeschnitten sowie in Bezug auf diesen Längsbeschnitt mittig entlang seines Umfangs an drei Seiten aufgetrennt. Die dadurch an diesen Seiten entstehenden dreiseitig eingeschnittenen Bereiche werden rechtwinklig nach außen gebogen und anschließend das erste Hohlprofil mit der nicht durchtrennten Seite in der vorstehend beschriebenen Weise um eine Längskante des zweiten Hohlprofils gebogen, wobei die nach außen gebogenen Bereiche als Flansche an zwei der vier Seiten des zweiten Hohlprofils anliegen.

Eine derartig aufgebaute Knotenstruktur bietet ein hohes Maß an Steifigkeit, ist jedoch in Bezug auf die einsetzbaren Profilquerschnitte nicht variabel. So muss die Länge des Ausschnitts beziehungsweise des Beschnitts der Längskanten exakt auf die Querschnittsabmessungen des zweiten Hohlprofils angepasst sein, um die für eine ausreichende Stabilität notwendige Bedingung des Formschlusses zu erfüllen.

Der Erfindung liegt daher die Aufgabe zugrunde, eine Knotenstruktur der eingangs genannten Art zu schaffen, die bei hoher Steifigkeit sich durch eine kompakte Bauweise und ein geringes Gewicht auszeichnet.

Diese Aufgabe wird mit einer aus zwei Hohlprofilen gebildeten dreidimensionalen Knotenstruktur gelöst, bei der das erste Hohlprofil mindestens eine ebene Seite aufweist und entlang seines Umfangs in einer einzigen Ebene bis auf einen in der ebenen Seite liegenden Steg durchtrennt und um diesen Steg aufgebogen ist, und das zweite Hohlprofil mindestens zwei unmittelbar benachbarte ebene Seiten aufweist, die an den durch das Trennen und Aufbiegen entstandenen, einander zugekehrten Enden des ersten Hohlprofils anliegen, wobei die beiden Hohlprofile an den Randbereichen des ersten Hohlprofils stoffschlüssig miteinander verbunden sind.

Ein besonderer Vorteil der Erfindung ist, dass durch das Auftrennen des ersten Hohlprofils mit anschließender Biegeoperation ein im Vergleich zu konventionell mittels IHU hergestellten Knotenstrukturen extrem kleiner Biegeradius erzielt werden kann, welcher eine sehr kompakte und damit gewichtsoptimierte Bauweise der Knotenstruktur ermöglicht. Gleichzeitig wird eine sehr hohe Steifigkeit erreicht, da die an den Enden des ersten Hohlprofils anliegenden Seitenwände des zweiten Hohlprofils die Knotenstruktur als Schottbleche des ersten Hohlprofils verstärken. Der Einsatz zusätzlicher verstärkender Bauteile in Form von Stützblechen o.ä. ist folglich nicht mehr notwendig, was zu einer gewichtsgünstigen Bauweise beiträgt.

Bei einer Ausgestaltung der Erfindung liegen die Konturen der beiden Hohlprofile spaltfrei aneinander. Dadurch ergibt sich eine verbesserte Verteilung der im Falle eines Crashs wirkenden Kräfte auf den gesamten Tragrahmen, wodurch die Gefahr des Kollabierens einzelner Elemente des Tragrahmens reduziert wird. Insbesondere wird das Auftreten punktueller Belastungsspitzen vermieden, da die Hohlprofile formschlüssig aneinander liegen. Da solche dreidimensionale Knotenstrukturen speziell im Bereich der Fahrgastzelle eingesetzt werden, ergibt sich somit ein erhöhter Schutz für die Fahrzeuginsassen im Falle eines Crashs.

Nach einer weiteren Ausgestaltung der Erfindung weisen die einander zugekehrten Enden des ersten Hohlprofils vorstehende Randbereiche auf, welche an dem zweiten Hohlprofil anliegen. Diese bilden für das Verbinden der beiden Hohlprofile durch Schweißen, Löten oder ein anderes Fügeverfahren gut nutzbare Anbindungszonen.

Wird die Knotenstruktur in besonders belasteten Bereichen des Fahrzeugtragrahmens eingesetzt, ist es zweckmäßig, dass im Bereich der Kanten des ersten Hohlprofils entlang des Trennschnitts sich über den gesamten Kantenradius erstreckende, dem Kantenradius entsprechend gekrümmte viereckige Ausschnitte symmetrisch zum Trennschnitt ausgeschnitten sind. Somit wird eine belastungsbedingte Kerbwirkung in den Ecken der einander zugekehrten Enden des ersten Hohlprofils weitgehend vermieden. In diesem Zusammenhang erweist es sich als besonders vorteilhaft, wenn die ausgeschnittenen Ausschnitte abgerundete Ecken aufweisen. Bei einem Einsatz der Knotenstruktur in weniger belasteten Bereichen des Fahrzeugtragrahmens kann auf diese Ausgestaltungen im Sinne einer kostengünstigen Fertigung verzichtet werden.

Ferner wird die oben angegebene Aufgabe durch ein Verfahren zur Herstellung der erfindungsgemäßen Knotenstruktur mit den folgenden Schritten gelöst:
a)Auftrennen eines ersten Hohlprofils mit mindestens einer ebenen Seite entlang seines Umfangs in einer einzigen Ebene bis auf einen in der ebenen Seite liegenden Steg.
b) Aufbiegen des ersten, teilweise aufgetrennten Hohlprofils um den in der ebenen Seite liegenden Steg,
c)Ansetzen eines zwei unmittelbar benachbarte ebene Seiten aufweisenden zweiten Hohlprofils mit diesen Seiten an die durch das Trennen und Aufbiegen entstandenen, einander zugekehrten Enden des ersten Hohlprofils und
d)stoffschlüssiges Verbinden des zweiten Hohlprofils mit dem ersten Hohlprofil an dessen Randbereichen.

Durch das Aufbiegen des ersten Hohlprofils kann die Geometrie der dreidimensionalen Knotenstruktur ohne übermäßigen fertigungstechnischen Aufwand den räumlichen Vorgaben des Anwenders angepasst werden. Dabei muss der Winkel zwischen den zwei ebenen Seiten des zweiten Hohlprofils mit dem Biegewinkel übereinstimmen, um ein möglichst spaltfreies Aneinanderliegen der beiden Hohlprofile zu ermöglichen.

Nach einer weiteren Ausgestaltung des Verfahrens ist vorgesehen, dass vor dem Auftrennen das erste Hohlprofil entlang seines Umfangs bis auf einen in der ebenen Seite liegenden Steg ausgeformt wird und dass der Trennschnitt mittig durch die Ausformung gelegt wird. Dadurch lassen sich mithilfe des Trennvorgangs an den einander zugekehrten Enden des ersten Hohlprofils vorstehende Randbereiche erzeugen, welche sich flächig an die ebenen Seiten des zweiten Hohlprofils anlegen und günstige geometrische Verhältnisse für die stoffschlüssige Verbindung der beiden Hohlprofile und damit auch hinsichtlich ihrer Belastbarkeit schaffen. Die Ausformung wird dabei bevorzugt durch Innenhochdruckformen in das erste Hohlprofil eingebracht.

Nach einer weiteren vorteilhaften Ausgestaltung des Verfahrens ist vorgesehen, dass das Auftrennen des ersten Hohlprofils durch Laserstrahlschneiden erfolgt. Dies ermöglicht präzise geschnittene Kanten, wodurch ebenfalls das stoffschlüssige Verbinden der Hohlprofile erleichtert wird.

Die Hohlprofile können durch Schweißen oder Löten verbunden werden, wobei sich der Einsatz von Laserstrahlung zum Schweißen oder Löten wiederum als besonders vorteilhaft erweist.

Im folgenden wird die Erfindung anhand einer ein Ausführungsbeispiel darstellenden Zeichnung erläutert. Im einzelnen zeigen:
- Fig. 1: eine aus Hohlprofilen gebildete dreidimensionale Knotenstruktur eines Tragrahmens für Fahrzeuge in perspektivischer Ansicht,
- Fig. 2: die Knotenstruktur der Fig. 1 in Draufsicht aus der Sicht des Pfeils A in Fig. 1,
- Fig. 3: die Knotenstruktur der Fig. 1 unter Weglassen der Schweißnähte aus der Sicht des Pfeils A in Fig. 1,
- Fig. 4: die Knotenstruktur der Fig. 1 im Querschnitt nach Linie B-B der Fig. 2,
- Fig. 5 a-e: die Verfahrensschritte zur Herstellung der Knotenstruktur der Fig. 1.

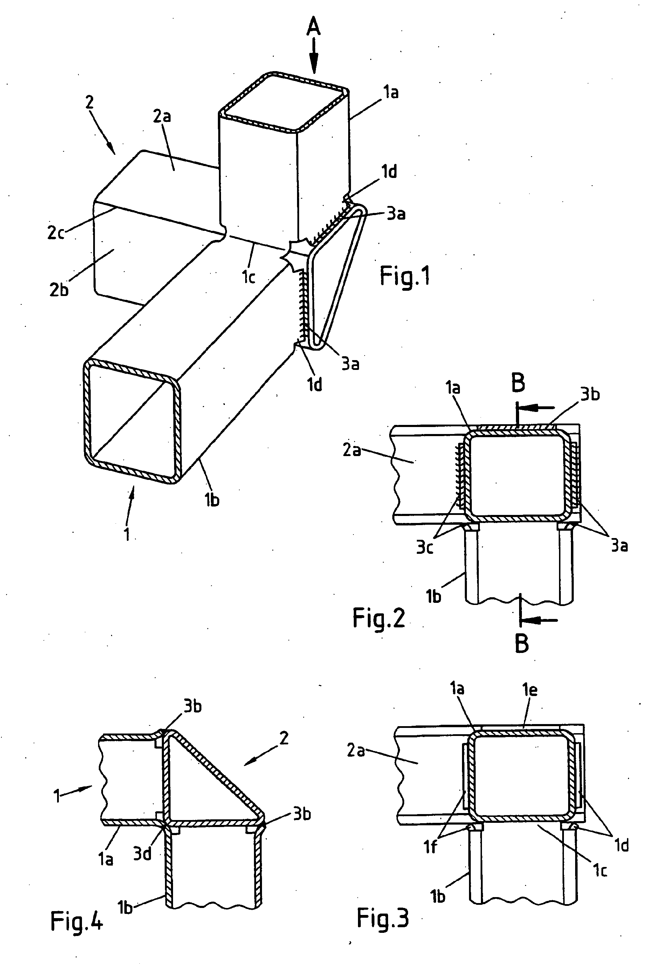

Die in Fig. 1 dargestellte dreidimensionale Knotenstruktur besteht aus zwei Hohlprofilen 1, 2, welche zusammen die Form eines Dreibeins bilden und stoffschlüssig miteinander verbunden sind. Das erste Hohlprofil 1, das einen im wesentlichen quadratischen Querschnitt aufweist, ist entlang seines Umfangs bis auf einen Steg 1c aufgetrennt und um den Steg 1c aufgebogen, so dass zwei einander zugekehrte Enden 1a, 1b des Hohlprofils 1 entstehen. Das zweite Hohlprofil 2 weist einen Querschnitt in Form eines gleichschenkligen Dreiecks auf und liegt mit seinen Schenkelseiten 2a, 2b an den Enden 1a, 1b des ersten Hohlprofils 1 an. Dabei entspricht der Winkel zwischen den Schenkelseiten 2a, 2b dem Biegewinkel, so dass die Schenkelseiten 2a, 2b an den Stirnseiten der Enden 1a, 1b des Hohlprofils 1 möglichst spaltfrei anliegen.

Die beiden Enden 1a, 1b des Hohlprofils 1 weisen entlang ihres Trennschnitts umgebogene Randbereiche 1d, 1e, 1f auf, welche an den Schenkelseiten 2a, 2b des Hohlprofils 2 anliegen. Mit seinem stirnseitigen Ende schließt das Hohlprofil 2 dabei annähernd bündig mit den umgebogenen Randbereichen 1d der Enden 1a, 1b ab, woraus sich die erwähnte Form eines Dreibeins ergibt. Eine Verlängerung über das Hohlprofil 1 hinaus ist allerdings denkbar. Die beiden Enden 1a, 1b des Hohlprofils 1 sind an ihren umgebogenen Randbereichen 1d, 1e, 1f mit den Schenkelseiten des zweiten Hohlprofils über Schweißnähte 3a, 3b, 3c verbunden. Die gemeinsame Kante 2c der Schenkelseiten 2a, 2b des Hohlprofils 2 ist mit dem Steg 1c des Hohlprofils 1 über eine Schweißnaht 3d verbunden.

Die Figuren 2 und 3 zeigen die Knotenstruktur in einer Draufsicht, wobei in Fig. 2 aus Gründen der Übersichtlichkeit auf die Darstellung der Schweißnähte verzichtet ist.

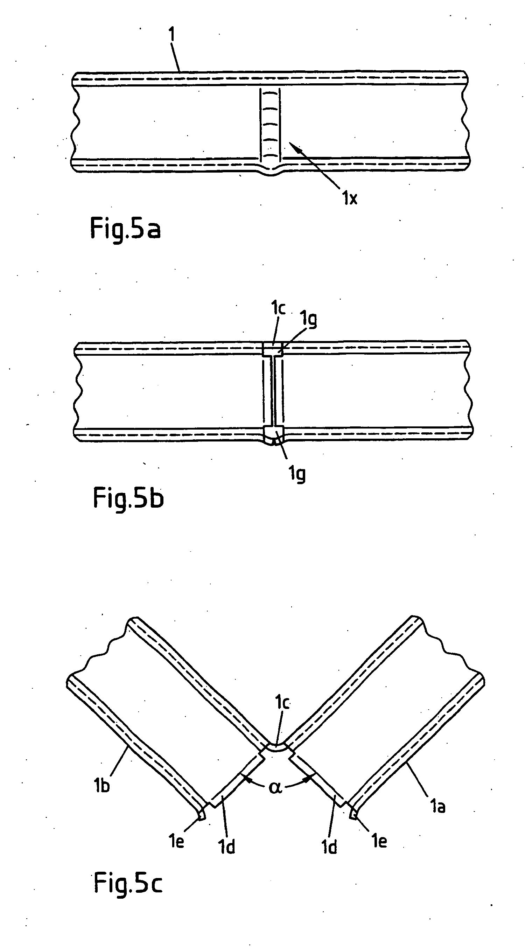

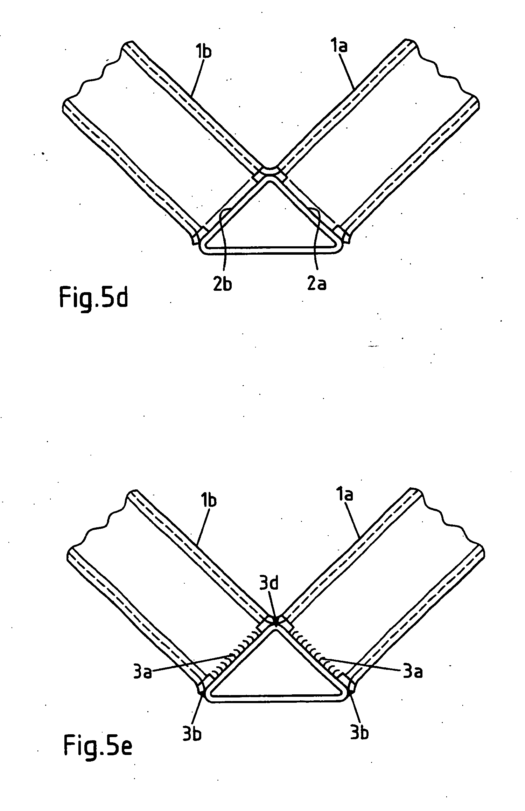

In Fig. 5 a-e sind die einzelnen Verfahrensschritte zur Herstellung der Knotenstruktur dargestellt. Wie in Fig. 5a gezeigt, wird zunächst mittels Innenhochdruckumformens eine Ausformung 1x in drei Seiten des Hohlprofils 1 entlang dessen Umfangs eingebracht. Sodann wird das Hohlprofil 1 entlang der Mitte der Ausformung 1x vorzugsweise durch Laserstrahlschneiden bis auf einen Steg 1c in der nicht ausgeformten vierten Seite aufgetrennt (Fig. 5b). Dabei wird das Schneidwerkzeug derart geführt, dass im Bereich der Kanten des Hohlprofils (1) sich über den gesamten Kantenradius erstreckende, dem Kantenradius entsprechend gekrümmte viereckige Ausschnitte (1g) symmetrisch zum Trennschnitt ausgeschnitten werden. Dadurch werden entlang des Trennschnitts vorstehende Randbereiche 1d, 1e, 1f erzeugt. Anschließend wird das Hohlprofil 1 um den Steg 1c um den Biegewinkel α aufgebogen (Fig. 5c). In einem nächsten Schritt wird das Hohlprofil 2 mit seinen Schenkelseiten 2a, 2b, deren eingeschlossener Winkel dem Biegewinkel α entspricht, an die Enden 1a, 1b des Hohlprofils 1 angesetzt (Fig. 5d), so dass die vorstehenden Randbereiche 1d, 1e, 1f allesamt an den Schenkelseiten 2a, 2b anliegen. In einem in Fig. 5e gezeigten letzten Schritt werden die Enden 1a, 1b des Hohlprofile 1 mit den Schenkelseiten 2a, 2b des Hohlprofils 2 an den vorstehenden Randbereichen 1d, 1e, 1f verschweißt. Zudem wird der Steg 1c mit der gemeinsamen Kante 2c der Schenkelseiten 2a, 2b verschweißt.

## Patentansprüche

1. Aus zwei Hohlprofilen (1, 2) gebildete dreidimensionale Knotenstruktur eines Tragrahmens für Fahrzeuge, bei der das erste Hohlprofil (1) mindestens eine ebene Seite aufweist und entlang seines Umfangs bis auf einen in der ebenen Seite liegenden Steg (1c) durchtrennt und um diesen Steg (1c) gebogen ist, und das zweite Hohlprofil (2) mindestens zwei unmittelbar benachbarte ebene Seiten aufweist, die an einander zugekehrten Enden (1a, 1b) des ersten Hohlprofils (1) anliegen, wobei die beiden Hohlprofile (1, 2) an den Randbereichen (1d, 1e, 1f) des ersten Hohlprofils (1) stoffschlüssig miteinander verbunden sind, **dadurch gekennzeichnet, dass** die Enden durch das Durchtrennen in einer einzigen Ebene und Aufbiegen entstanden, sind.

2. Knotenstruktur nach Anspruch 1,
**dadurch gekennzeichnet, dass**
die Konturen der beiden Hohlprofile (1, 2) spaltfrei aneinander liegen.

3. Knotenstruktur nach Anspruch 1 oder 2,
**dadurch gekennzeichnet, dass**
das erste Hohlprofil (1) an seinen einander zugekehrten Enden (1a, 1b) vorstehende Randbereiche (1d, 1e, 1f) aufweist, die an dem zweiten Hohlprofil (2) anliegen.

4. Knotenstruktur nach einem der Ansprüche 1 bis 3,
**dadurch gekennzeichnet, dass** im Bereich der Kanten des ersten Hohlprofils (1) entlang des Trennschnitts sich über den gesamten Kantenradius erstreckende, dem Kantenradius entsprechend gekrümmte viereckige Ausschnitte (1g) symmetrisch zum Trennschnitt ausgeschnitten sind.

5. Knotenstruktur nach Anspruch 4,
**dadurch gekennzeichnet, dass** die ausgeschnittenen Ausschnitte (1g) abgerundete Ecken aufweisen.

6. Verfahren zur Herstellung einer Knotenstruktur nach Anspruch 1,
**gekennzeichnet durch** folgende Verfahrensschritte:
a) Auftrennen eines ersten Hohlprofils (1) mit mindestens einer ebenen Seite entlang seines Umfangs in einer einzigen Ebene bis auf einen in der ebenen Seite liegenden Steg (1c),
b) Aufbiegen des ersten, teilweise aufgetrennten Hohlprofils (1) um den in der ebenen Seite liegenden Steg,
c) Ansetzen eines zwei unmittelbar benachbarte ebene Seiten aufweisenden zweiten Hohlprofils (2) mit diesen Seiten (2a, 2b) an die **durch** das Trennen und Aufbiegen entstandenen, einander zugekehrten Enden (1a, 1b) des ersten Hohlprofils (1),
d) stoffschlüssiges Verbinden des zweiten Hohlprofils (2) mit dem ersten Hohlprofil (1) an dessen Randbereichen (1d, 1e, 1f).

7. Verfahren nach Anspruch 6,
**dadurch gekennzeichnet, dass** vor dem Auftrennen das erste Hohlprofil (1) entlang seines Umfangs bis auf einen in der ebenen Fläche liegenden Steg (1c) ausgeformt wird und dass der Trennschnitt mittig durch die Ausformung (1x) gelegt wird.

8. Verfahren nach Anspruch 7,
**dadurch gekennzeichnet, dass** die Ausformung (1x) durch Innenhochdruckumformen in das erste Hohlprofil (1) eingebracht wird.

9. Verfahren nach Anspruch 6,
**dadurch gekennzeichnet, dass** die Auftrennung des ersten Hohlprofils (1) durch Laserstrahlschneiden erfolgt.

10. Verfahren nach Anspruch 6,
**dadurch gekennzeichnet, dass** die Hohlprofile (1, 2) durch Schweißen oder Löten verbunden werden.

11. Verfahren nach Anspruch 10,
**dadurch gekennzeichnet, dass** die Schweißung oder Lötung mittels Laserstrahlung erfolgt.

## Claims

1. Three-dimensional node structure formed from two hollow profiles (1, 2) of a load-bearing frame for motor vehicles, with which the first hollow profile (1) has at least one flat side, and is separated along its circumference as far as a web (1c) located on its flat side and is bent around this web (1c), and the second hollow profile (2) has at least two directly adjacent flat sides, which are in contact at ends (1a, 1b) facing one another of the first hollow profile (1), wherein the two hollow profiles (1, 2) are metallurgically joined to one another at the peripheral areas (1d, 1e, 1f) of the first hollow profile (1), **characterised in that** the ends are formed by through separation in one single plane and bending.

2. Node structure according to Claim 1, **characterised in that** the contours of the two hollow profiles (1, 2) are in contact with one another free of any gap.

3. Node structure according to Claim 1 or 2, **characterised in that** the first hollow profile (1) has at its ends (1a, 1b) facing one another projecting peripheral areas (1d, 1e, 1f), which are in contact at the second hollow profile (2).

4. Node structure according to any one of Claims 1 to 3, **characterised in that** in the area of the edges of the first hollow profile (1), along the separation cut and extending over the entire edge radius, rectangular cut-outs (1g) are cut out symmetrically to the separation cut and curved in accordance with the entire edge radius.

5. Node structure according to Claim 4, **characterised in that** the cut-outs (1g) have rounded corners.

6. Method for the manufacture of a node structure according to Claim 1, **characterised by** the following method steps:
a) Separation of a first hollow profile (1), with at least one flat side along its circumference in one single plane as far as a web (1c) located in the flat side;
b) Bending of the first partially separated hollow profile (1) around the web located on its flat side;
c) Setting of a second hollow profile (2), having two directly adjacent flat sides, with these sides (2a, 2b) at the ends (1a, 1b), produced by the separation and bending, facing towards one another, of the first hollow profile (1);
d) Metallurgical joining of the second hollow profile (2) to the first hollow profile (1) at its peripheral areas (1d, 1e, 1f).

7. Method according to Claim 6, **characterised in that** before the separation, the first hollow profile (1) is shaped along its circumference as far as a web (1c) located in the flat surface, and **in that** the separation cut is located centrally through the shaping area (1x).

8. Method according to Claim 7, **characterised in that** the shaping area (1x) is introduced into the first hollow profile (1) by internal high-pressure forming.

9. Method according to Claim 6, **characterised in that** the separation of the first hollow profile (1) is effected by laser beam cutting.

10. Method according to Claim 6, **characterised in that** the hollow profiles (1, 2) are connected by welding or soldering.

11. Method according to Claim 10, **characterised in that** the welding or soldering is carried out by means of laser beam operation.

## Revendications

1. Structure de noeud tridimensionnel formée par deux profils creux (1, 2) d'un châssis porteur pour véhicules, dans laquelle le premier profil creux (1) présente au moins un côté plat et est sectionné le long de son contour jusqu'à une âme (1c) située sur le côté plat et est plié autour de cette âme (1c) et le second profil creux (2) présente au moins deux côtés plats directement adjacents, qui sont en contact avec les extrémités (1a, 1b) placées l'une en face de l'autre du premier profil creux (1), ces deux profils creux (1, 2) étant unis entre eux au moyen d'une union positive de matériaux par les zones marginales (1d, 1e, 1f) du premier profil creux (1), **caractérisée en ce que** les extrémités ont été produites par sectionnement (1) en un seul plan et pliées.

2. Structure de noeud selon la revendication 1, **caractérisée en ce que** les contours des deux profils creux (1, 2) sont en contact mutuel sans fissures.

3. Structure de noeud selon la revendication 1 ou 2, **caractérisée en ce que** le premier profil creux (1) présente en ses extrémités (1a, 1b) disposées l'une en face de l'autre des zones marginales (1d, 1e, 1f) saillantes qui sont en contact avec le second profil creux (2).

4. Structure de noeud selon l'une des revendications 1 à 3, **caractérisée en ce que**, sur la zone des chants du premier profil creux (1), le long de la découpe de séparation, sont découpées, de manière symétrique par rapport à la découpe de séparation, des sections carrées (1g) recourbées conformément au rayon des chants, qui s'étendent sur tout le rayon des chants.

5. Structure de noeud selon la revendication 4, **caractérisée en ce que** les sections découpées (1g) présentent des coins arrondis.

6. Procédé pour fabriquer une structure de noeud selon la revendication 1, **caractérisé par** les phases de procédé suivantes :
a) sectionnement d'un premier profil creux (1) ayant au moins un côté plat, le long de son contour, en un seul plan jusqu'à une âme (1c) située sur le côté plat,
b) pliage du premier profil creux (1) sectionné en partie, autour de l'âme située sur le côté plat,
c) mise en place d'un second profil creux (2) qui présente deux côtés plats directement adjacents sur ces côtés (2a, 2b), sur les extrémités (1a, 1b) disposées l'une en face de l'autre du premier profil creux (1), qui ont été produites lors du sectionnement et du pliage,
d) union positive des matériaux du second profil creux (2) avec le premier profil creux (1) par les zones marginales (1d, 1e, 1f) de celui-ci.

7. Procédé selon la revendication 6, **caractérisé en ce que**, avant le sectionnement, le premier profil creux (1) est conformé le long de son contour jusqu'à une âme (1c) située sur la surface plate et **en ce que** la découpe de séparation est réalisée de façon centrale moyennant la conformation (1x).

8. Procédé selon la revendication 7, **caractérisé en ce que** la conformation (1x) est appliquée au premier profil creux (1) par déformation à haute pression interne.

9. Procédé selon la revendication 6, **caractérisé en ce que** le sectionnement du premier profil creux (1) est réalisé moyennant une découpe au rayon laser.

10. Procédé selon la revendication 6, **caractérisé en ce que** les profils creux (1, 2) sont unis par soudure directe ou soudure indirecte.

11. Procédé selon la revendication 10, **caractérisé en ce que** la soudure directe ou la soudure indirecte est réalisé moyennant radiation laser.
